# EUROPEAN PATENT APPLICATION

(11) **EP 1 315 083 A2**
(43) Date of publication of application: **28.05.2003**
(21) Application number: 02025921.4
(22) Date of filing: 20.11.2002
(51) Int. Cl.: G06F 9/38

(54) **Processor and method of pipelining**

(30) Priority: 26.11.2001 GB 0128286
(71) Applicant: Infineon Technologies AG, 81669 München (DE)
(72) Inventor: Farrall, Glenn Ashley, Long Ashton, Bristol, BS41 9BY (GB); Hastie, Neil Stuart, Lydney, Gloucestershire, GL 15 6 NS (GB); Nordan, Eric Karl, Santa Clara, CA 95050 (US)
(74) Representative: Repkow, Ines, Dr. Dipl.-Ing.

(57) **Abstract**

An electronic processing device has an integer pipeline (2) and a load/store pipeline (3) arranged in parallel to receive a series of instructions via a Fetch stage (4) and a Predecode stage (5). If an instruction (c) is stalled in a Decode stage (6) of the integer pipeline (2), one or more Delay stages (14, 15) can be switched into (and out of) the integer pipeline (2) between the Decode stage (6) and the Predecode stage (5) so as to increase or decrease its effective length. This allows the Predecode stage (5) to continue to issue instructions and therefore the load/store pipeline (3) does not need to stall. The maximum number of delay stages that need to be available for switching into the integer pipeline (2) is the same as the load-use penalty for that pipeline.

## Description

### Field of the Invention

This invention relates, in general, to an electronic processing device and to a method of pipelining in such a device, and more particularly, though not exclusively, to a superscalar electronic processing device having multiple pipelines and to a method of pipelining instructions in such a device.

### Background of the Invention

As is well known, many instructions provided to an electronic processing device, such as a microprocessor, require a number of steps to be carried out by the processor. For example, an instruction to carry out an arithmetic operation on a pair of numbers which are stored in a memory requires that the two numbers be obtained from the correct addresses in the memory, that the arithmetic operation be obtained from a memory location, that the two numbers be operated on according to the arithmetic operation, and that the result be written back into memory so that it can be used in a subsequent operation. Many of the steps must be carried out in sequence in consecutive clock cycles of the processor. Thus, a number of clock cycles will be taken up for each instruction.

It is also known that the operation of such an electronic processing device can be speeded up by use of so-called pipelines. A pipeline in such a device is a series of stages carrying out the different steps of the instruction, with each stage carrying out one step, and the instruction then moving on to the next, stage where the next step is carried out. In this way, a series of instructions can be moved into the pipeline one by one on each clock cycle, thereby increasing the throughput since each instruction only needs to wait until the first stage of the pipeline is available, rather than waiting for the whole of the previous instruction to be completed.

A scalar pipeline is a pipeline into which a maximum of one instruction per cycle can be issued. If all data and control stalls in the pipeline can be eliminated, the ideal situation of one clock cycle per instruction (1 CPI) is achieved. However, it is desirable to reduce the number of clock cycles per instruction still further (CPI <1). To do this, more than one instruction per cycle needs to issue from the pipeline. Thus, a superscalar device is one into which multiple instructions may be issued per clock cycle. Ideally, an N-way superscalar processing device would allow the issue of N instructions per clock cycle. However data and control stalls caused by pipeline hazards apply equally to superscalar systems. This limits the effective number of instructions that can be issued per clock cycle.

There may be different pipelines optimised for different types of instructions. For example, load/store instructions may be directed to one type of pipeline, and arithmetic instructions may be directed to a different type of pipeline, which may also be further divided into, for example, integer or floating point type pipelines. There can therefore be a number of pipelines arranged in parallel in a device, with different numbers of different types of pipeline being possible.

Thus, when instructions are fetched from memory, they are first predecoded to determine which type of instruction they are so that they can be directed to the appropriate type of pipeline, in which they are passed to a decode stage. In general, the Fetch and Predecode stages are designed to allow for a number of instructions to be handled at once, so that, by arranging for sets, of the same number and types of instruction as there are pipelines, to be arranged together by the programmer of compiler, such a set can be passed through to the Decode stage of each of the pipelines on the same clock cycle. The set of instructions is then executed and written back to memory in parallel on the same clock cycles, while the next sets of instructions are passed through the pipeline stages.

As is known, however, if an operand required for one of the instructions is not yet available, for example because it requires the result of an earlier instruction that is still in a pipeline and has not yet been written back into memory, then the instruction requiring that operand cannot proceed and the instruction stalls at the Decode stage. Usually, if an instruction is stalled at the Decode stage, then the other instructions of that set are also stalled in their pipelines, so that all the instructions forming the set maintain their relationship through the pipelines so that the results come out in the same order that the instructions were entered into the pipeline. However, this means that not only the instruction requiring the missing operand is stalled, as are, of course, all subsequent instructions in that pipeline, but so are the other instructions of the set that follow the stalled instruction in the program flow, and all subsequent instructions in those pipelines also. This stall behaviour is well known in pipelines. When a stall is induced by a memory load followed immediately by the use of a loaded value, this is known as the load-use penalty and depends on the number of clock cycles for which an instruction will stall. It will be appreciated that this depends on the number of stages in the pipeline and, for longer pipelines, can become quite large.

Therefore, it is an object of the present invention to provide an electronic processing device and to a method of pipelining in such a device, which reduces the load-use penalty.

### Brief Summary of the Invention

Accordingly, in a first aspect, the present invention provides an electronic processing device having at least two pipelines arranged in parallel to receive a series of instructions, each pipeline having a plurality of standard stages through which the instructions pass, and wherein at least one of the pipelines is provided with at least one delay stage which is switchable into and out of the pipeline to increase or decrease its effective length.

In a preferred embodiment, the electronic processing device further comprises control means for controlling the at least one delay stage to switch it into and out of the pipeline depending on whether a previous instruction in the pipeline is stalled or not.

According to a second aspect of the present invention, there is provided a method of pipelining in an electronic processing device having at least two pipelines arranged in parallel to receive a series of instructions, each pipeline having a plurality of stages through which the instructions pass, the method comprising the steps of: at a first clock cycle, providing a first respective instruction to a first stage of each of the respective pipelines; and at subsequent clock cycles, providing a subsequent respective instruction to the first stage of each respective pipeline, and, unless a previous instruction is stalled in a pipeline, moving each respective instruction to the next stage of the respective pipeline; wherein, if a previous instruction is stalled in a pipeline, a delay stage is switched into that pipeline to receive the next instruction.

Preferably, if a previous instruction is stalled in a pipeline, the instructions in the other pipeline(s) are not stalled or delayed.

In a preferred embodiment, a plurality of delay stages are available for switching into a series in a pipeline.

The or each delay stage is preferably switched into the pipeline between a predecode stage and a decode stage of the pipeline.

In one embodiment, the at least one delay stage is switched into the pipeline between a predecode stage and a decode stage, if a previous instruction is stalled in the decode stage, and wherein the at least one delay stage is switched out of the pipeline if the predecode stage has no instruction to pass to any decode stage.

Preferably, one delay stage of a plurality of delay stages is switched into a series of delay stages in the pipeline between adjacent the predecode stage per clock cycle if a previous instruction is stalled in the decode stage, and wherein one delay stage adjacent the predecode stage is switched out of the pipeline per clock cycle if the predecode stage has no instruction to pass to any decode stage.

The pipeline provided with at least one delay stage switchable into and out of the pipeline is preferably an integer pipeline and the other pipeline is preferably a load/store pipeline.

Preferably, the maximum number of delay stages in a series in a pipeline is equal to the load-use penalty for that pipeline.

### Brief Description of the Drawings

One embodiment of the present invention will now be described, by way of example, with reference to the accompanying drawings, of which:
FIG. 1 shows a schematic diagram of a pair of pipelines in a superscalar electronic processing device;
FIG. 2 is an instruction/cycle diagram showing which stages of the pipelines particular instructions are in during clock cycles in a superscalar electronic processing device according to one embodiment of the present invention;
FIG. 3 (a - c) illustrates the instructions passing through the pair of pipelines during clock cycles 3, 4 and 5 of FIG. 1 showing how one of the piplines is effectively increased in length during cycles 4 and 5;
FIG. 4 (a - c) illustrates the instructions passing through the pair of pipelines during clock cycles 10, 11 and 12 of FIG. 1 showing how one of the piplines is effectively decreased in length during cycles 10 and 11; and
FIG. 5 schematically shows a physical implementation of two delay stages between a predecode stage and a decode stage of a pipeline according to an embodiment of the invention.

### Detailed Description of the Drawings

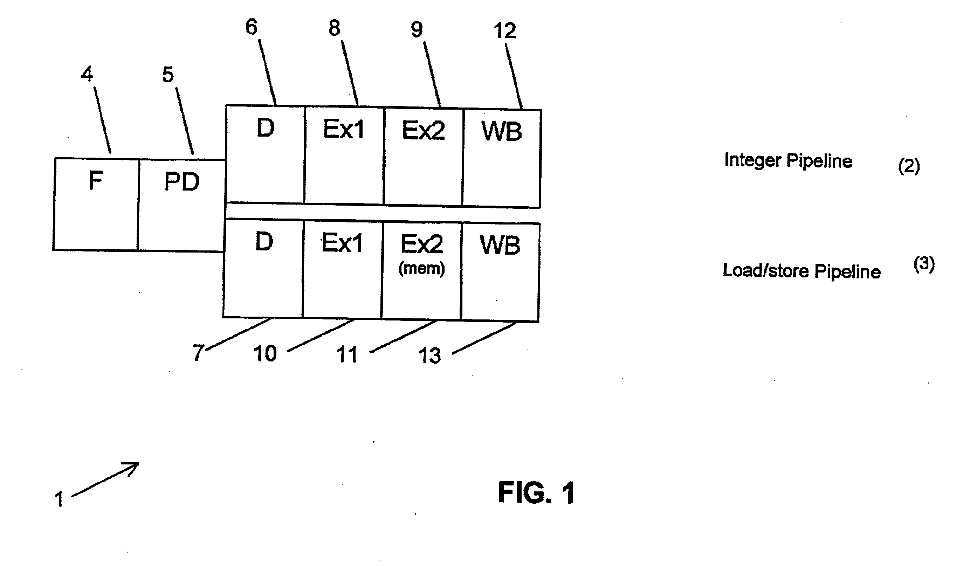

Thus, a FIG. 1 shows a six-stage pipeline system 1 in a superscalar electronic processing device having one integer pipeline 2 and one load/store pipeline 3. Each of the pipelines 2 and 3 are formed of six stages, in this embodiment, with the first stage being a Fetch (F) stage, the second stage being a Predecode (PD) stage, the third stage being a Decode (D) stage, the next two stages being Execute (Ex1 and Ex2) stages and the final stage being a Writeback (WB) stage. Since an instruction must be at least predecoded before it can be determined which of the two pipelines it is meant for, the first two stages of the pipelines, the Fetch (F) stage 4 and the Predecode (PD) stage 5, are shared by the integer pipeline 2 and the load/store pipeline 3. After the predecoding stage, when it has been determined which type of pipeline the instruction should be passed to, the instruction is passed to either a integer Decode (D) stage 6 or an load/save Decode (D) stage 7. It will be appreciated that the Fetch and Predecode stages 4 and 5 are twice the width of the stages in each of the pipelines 2 and 3 to enable two instructions to be handled simultaneously by the Fetch and Predecode stages so that an instruction can be passed to both the store/load and integer pipelines at the same time.

A programmer or compiler usually attempts to provide alternating integer and load/store instructions so that they can be paired together in program order in the Predecode stage 5. Ideally an integer instruction will be paired with an immediately following load/store instruction where possible, such that the integer instruction is the older of the pair. Thus, ideally, one such pair of instructions is issued to the appropriate Decode stages of the load/store and integer pipelines on each clock cycle. If this is not possible, the instructions are issued to the Decode stage(s) separately.

The decode stages 6 and 7 in both the integer pipeline and the load/store pipeline gather together the source operands for the instruction execution and pass the operands to the next stages in the pipeline, which are first and second Execution (Ex1 and Ex2) stages 8 and 9 in the integer pipeline and first and second Execution (Ex1 and Ex2) stages 10 and 11 in the load/store pipeline. The integer pipeline Execution stages 8 and 9 perform the integer operation required by the instruction, and the load/store pipeline Executions tages 10 and 11 perform the load or store operations required by the instruction. The actual accessing of memory is performed in Execution stage 11. The result of the instruction execution are then passed to Writeback (WB) stages 12 and 13, which return the result of the instruction execution back to a memory or register file.

The operands required by the Decode stages 6 and 7 may be held in a register file or in-flight in one or other of the pipelines. Result forwarding in the pipelines allows results to be forwarded back to the Decode stage of a pipeline as soon as they become available, without needing to wait for them to issue from the Writeback stage. In the case of the integer pipeline, this may be from either of the Execution stages 8 and 9 or from the Writeback stage 12, although, in the case of a load/store instruction, this can only be forwarded from the Writeback stage 13.

If an operand is not available when required by the Decode stage, then the Decode stage will stall until the operand becomes available. In this system, when any pipeline stalls, all earlier pipestages, that is the stages before the stalling stage in the pipeline, must also stall, in order to maintain the ordering of instructions within the pipeline. Thus, if the integer pipeline Decode stage 6 stalls, then the load/store Decode stage 7 and the Predecode and Fetch stages 5 and 4 must also stall.

In order to determine which pipeline stages must stall it is important to know which instructions are younger than the stalling instruction and which are older. The younger ones need to stall to maintain instruction ordering, the older ones are not affected by the stall and must continue. The relative age of instructions can be established by inspecting the pipelines according to a few simple rules:
1. An instruction will be older than any other instruction in a pipeline stage to its left in the pipeline.
2. Conversely an instruction will be younger than any other instruction in a pipeline stage to its right.
3. An instruction in a particular stage of the integer pipeline will be older than an instruction in the equivalent stage of the load/store pipeline.
4. Conversely, an instruction in a particular stage of the load/store pipeline will be younger than an instruction in the equivalent stage of the integer pipeline.

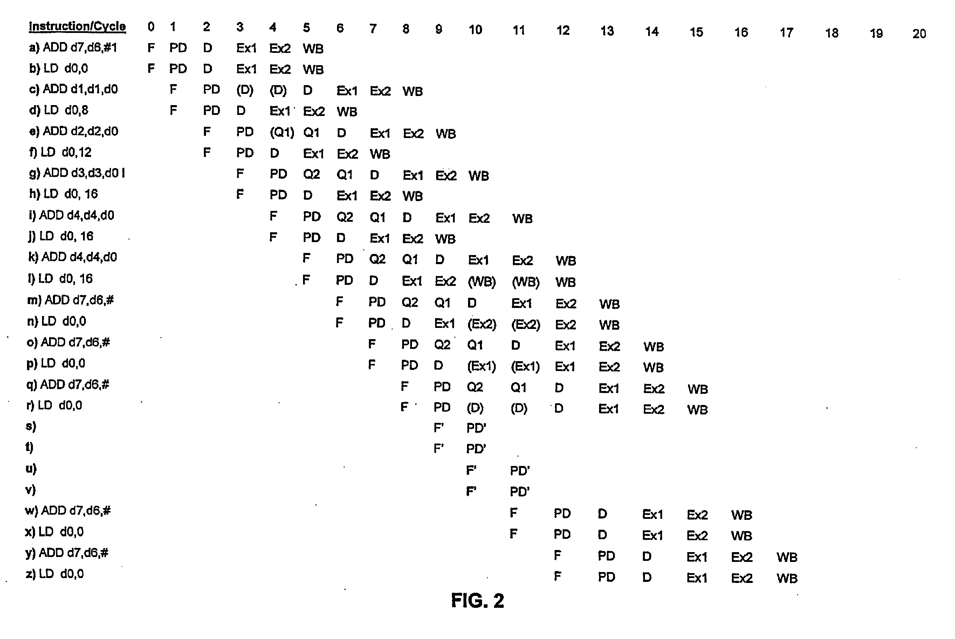

FIG. 2 shows how instructions flow down the pipelines, indicating which stage an instruction is at for particular clock cycles. Thus, for example, instructions (a) and (b) both enter the Fetch stage at clock cycle 0, move to the Predecode stage at clock cycle 1 and then continue on successive clock cycles to move through the Decode and Execution stages and issue from the Writeback stages on clock cycle 5. In this example, the instructions (a) - (c) mean the following:
a) ADD d7, d6, #1 ; Add 1 to d6 and place the result in d7
b) LD d0,0 ; Load register d0 from memory location 0
c) ADD d1, d1, d0 ; Add d0 to d1 and place the result in d1

It will be seen, therefore, that instruction (c) is dependent on instruction (b) because instruction (c) needs to wait for d0 to be loaded with instruction (b). Therefore, turning back to FIG. 2, it will be seen that instruction (c) passes through the Fetch and Predecode stages normally on clock cycles 1 and 2, but then stalls in the Decode stage on clock cycles 3 and 4 (as shown by brackets around the D), before the result of instruction (b) is made available from the Writeback stage in clock cycle 5, which can therefore be obtained by the Decode stage for instruction (c) and then passed forward for execution in clock cycle 6. Hitherto, this would have meant, as mentioned above, that the paired load/store instruction (d) would also need to be stalled in the Decode stage for clock cycles 3 and 4. However, according to the present embodiment of the invention, the load/store instructions no longer need to be stalled and can progress normally through the load/store pipeline, as seen in FIG. 2.

Nevertheless, with instruction (c) stalled in the Decode stage in clock cycles 3 and 4, this means that instruction (e), which issues from the Predecode stage in clock cycle 3, cannot now be passed to the Decode stage. Therefore, according to this embodiment of the invention, instead of stalling instruction (e), as would have occurred in prior art devices, instruction (e) is now passed to a first Delay stage Q1 in clock cycle 3. Of course, since the decode stage is stalled in clock cycle 3, instruction (e) is stalled in Delay stage Q1, in clock cycle 4, until clock cycle 5, when instruction (c) issues from the Decode stage, allowing instruction (e) to issue from Delay stage Q1 into the Decode stage. However, turning now to instruction (g), it will be apparent that, in clock cycle 4, it cannot issue from the Predecode stage to Delay stage Q1 because instruction (e) is still in Delay stage Q1. Therefore, instruction (g) is passed to a second Delays stage Q2. From second Delay stage Q2, instruction (e) can then pass normally in subsequent clock cycles through the first Delay stage Q1 to the Decode stage and then through the Execution stages Ex1 and Ex2 to the Writeback stage. From this point, as long as there are instructions flowing through both pipelines, the two Delay stages Q1 and Q2 are included in the integer pipeline between the Predecode and the Decode stages.

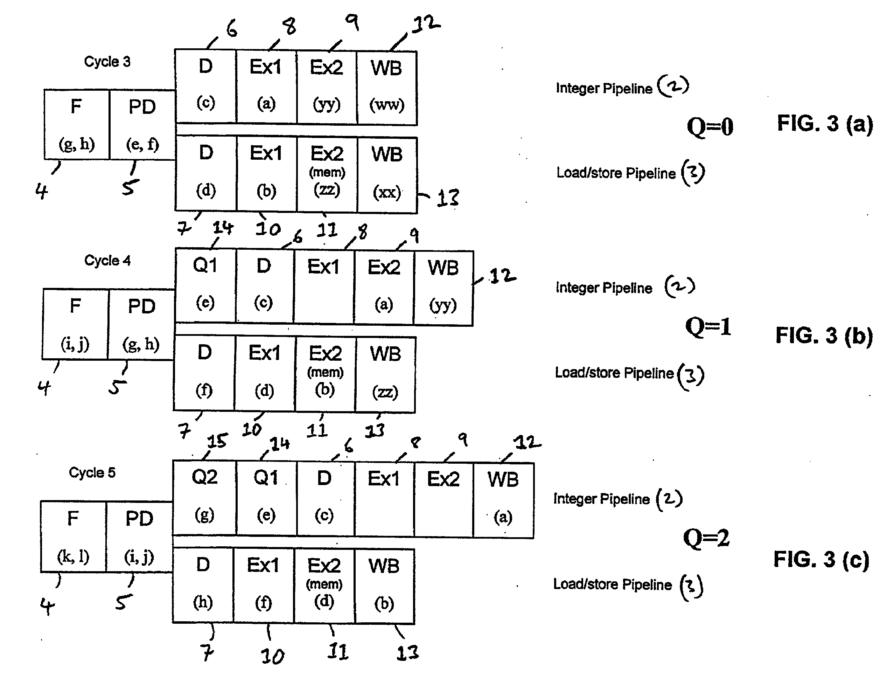

This is more clearly shown in FIG. 3, the same pipelines as shown in FIG.1 are shown with the same reference numbers, but indicating which instructions are present in each of the stages in each of clock cycles 3, 4 and 5 in FIGs 3 (a), (b) and (c), respectively. Thus, turning first to FIG. 3 (a), and referring also to FIG. 2, at clock cycle 3, instructions (g) and (h) are in the Fetch stage 4, instructions (e) and (f) are in Predecode stage 5, instruction (c) is in Decode stage 6 of the integer pipeline 2, instruction (a) is in the first Execution stage 8 of the integer pipeline 2 and instruction (d) is in the Decode stage 7 and instruction (b) is in the first Execution stage 10 of the load/store pipeline 3. FIG. 3 shows previous instructions (zz), (yy), (xx) and (ww) in later stages of the pipelines, although they are not shown in FIG. 2.

In FIG. 3 (b), in the next clock cycle 4, it will be seen that instructions (g) and (h) have moved to the Predecode stage 5 from the Fetch stage 4, where they have been replaced by the next pair of instructions (i) and (j). Similarly, instruction (f) has moved to the Decode stage 7 of the load/store pipeline 3, with all the previous instructions in that pipeline moving forward by one stage. However, in the integer pipeline 2, instruction (c) is stalled in the Decode stage 6, as was described above. Thus, although the previous instructions (a) and (yy) in the integer pipeline 2 can move forward to the second Execution stage 9 and the Writeback stage 12, respectively, instruction (e) cannot issue from the Predecode stage 5 to the Decode stage 6, since the Decode stage 6 has not issued instruction (c). Instead, a first Delay (Q1) stage 14 is switched into the integer pipeline 2 between the Predecode stage 5 and the Decode stage 6. In this way, the progress of the later instructions through the Fetch and Predecode stages 4 and 5 is not impeded, and the progress of instructions through the load/store pipeline 3 can continue normally.

As shown in FIG. 3 (c), in the next clock cycle 5, all the instructions passing through the load/store pipeline 3 continue to the next stage, and all the instructions passing through the Fetch and Predecode stages 4 and 5 also continue on to the next stage, except that instruction (g) issuing from the Predecode stage 5 cannot pass to the first Delay stage 14, since that still has instruction (e) stalled in it due to the fact that instruction (c) is still in the Decode stage 6. Therefore, just as the first Delay stage 14 was added in the previous clock cycle 4 (FIG. 3 (b)), so a second delay (Q2) stage 15 is added in this clock cycle 5 to the pipeline 2 between the Predecode stage 5 and the first Delay stage 14 and the instruction (g) is passed to this second Delay stage 15.

It should be noted that instruction (e) now completes the Writeback stage in clock cycle 9, whereas its paired instruction (f) completes in clock cycle 7. The rules for establishing the relative age of instructions mentioned above still apply. However, the number of Delay stages in use must also be used in order to correctly determine which stages to stall or forward from. For a stall in the second Execution stage of the load/store pipeline, all younger instructions must be stalled. Using the rules mentioned above and by inspection of the different pipeline diagrams, the stages are, in age order:
For Q=0: LS-Ex2, IP-Ex1, LS-EX1, IP-D, LS-D, PD, F
For Q=1: LS-Ex2, IP-D, LS-Ex1, IP-Q1, LS-D, PD, F
For Q=2: LS-Ex2, IP-Q1, LS-Ex1, IP-Q2, LS-D, PD, F
Where the LS prefix refers to the load/store pipeline and the IP prefix refers to the integer pipeline. Thus, the ease of determining stall and forwarding information, based as it is on the single global value of the number of Delay stages (Q-value), leads to a simple implementation and is an important advantage of this embodiment of the invention.

As will be apparent from following instruction (c) in FIG. 2, since the load/store pipeline 3 has only two Execution stages, instruction (c) is stalled for two clock cycles, so that the load-use penalty for the "standard" pipelines (without any delay stages) is two. Therefore, the maximum number of Delay stages that need to be available for switching into the pipeline is two. With two Delay stages, and the pipelines in a "steady state", as can be seen for instructions (g), (i) and (k), the instructions are emerging from the Writeback stage at successive clock cycles, showing that there is no further delay being caused in the pipeline. Thus, the load-use penalty has been reduced to effectively one when one Delay stage has been switched into the pipeline and has been minimised to effectively zero when both Delay stages are switched into the pipeline.

Nevertheless, it may be undesirable to simply add the two Delay stages and then keep them in the pipeline, since, if there are branches in the pipelines which have been mis-predicted, all the instructions following the misprediction must be discarded. In such a case, the greater the number of stages that are discarded, the greater the number of clock cycles before the pipleline is once again full, so that the pipelining is not efficient. It is therefore desirable to minimise the pipeline length whenever possible, although it is also possible to provide code specifically written to avoid load-use penalties to run only on a Q=0 pipeline to maintain optimum branch latency.

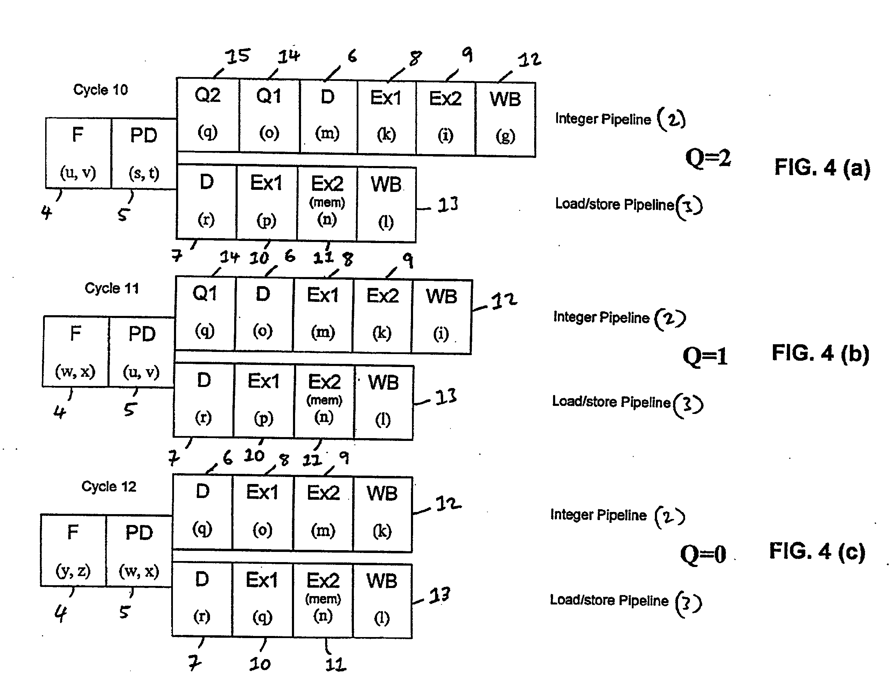

In order to minimise the pipeline length, the Delay stages can be switched out of the pipeline, at a rate of one per clock cycle, when there are no instructions to issue from the Predecode stage into either of the integer or load/store pipelines. This can happen in cases of instruction cache misses, branch misprediction, etc. Delay stages can also be removed when there are no valid instructions in the integer pipeline (i.e. when there is a long sequence of load/store instructions with no integer instructions). In order to maintain instruction ordering whenever Delay stages are removed from the pipeline, it is necessary to stall the load/store pipeline. This is shown in FIG. 2 and FIG. 4 at clock cycles 10, 11 and 12.

As can be seen at clock cycle 9 in FIG. 2, the pair of instructions entering the Fetch stage are instructions (s) and (t), which are null, so that the Fetch stage is empty (F'). As then seen at clock cycle 10 in FIG. 2 and in FIG. 4 (a), instructions (s) and (t) are passed to the Predecode stage 5 from the Fetch stage 4, where they are replaced by instructions (u) and (v), which are also null.

The integer pipeline 2 has instructions (q), (o), (m), (k), (i) and (g) moving normally through successive stages 15, 14, 6, 8, 9 and 12 in the pipeline 2, which includes two Delay stages 15 and 14, whereas the load/store pipeline 3 is stalled, with instructions (r), (p), (n) and (I) stalled in the Decode, first and second Execute and Writeback stages 7, 10, 11 and 13 of the load/store pipeline 3.

In clock cycle 11 (FIG. 4 (b)), the load/store pipeline 3 is still stalled, but the instructions in the integer pipeline 2 move normally through the successive stages. However, since instructions (s) and (t), which should now issue from the Predecode stage 5 of the pipeline, are null, nothing passes through to the Decode stage 7 of the load/store pipeline 3 (which stage is in any event stalled), and the second Delay stage 15 is switched out of the integer pipeline 2. It will be seen that null instruction (u) and (v) pass to the Predecode stage 5 and are replaced in the Fetch stage 4 by new instructions (w) and (x), which are not null.

In the next clock cycle 12 (FIG. 4 (c)), the load/store pipeline 3 having been stalled for two clock cycles, is ready to issue instructions to the next successive stage. The instructions in the integer pipeline 2 move normally through the successive stages. However, since instructions (u) and (v), which should now issue from the Predecode stage 5 of the pipeline, are null, nothing passes through to the Decode stage 7 of the load/store pipeline 3 (which stage is in any event still full), and the first Delay stage 14 is switched out of the integer pipeline 2. The integer pipeline is therefore back to its "original" length with Q=0, and the following instructions pass through the pipelines in the normal manner, as shown in the remainder of FIG. 2.

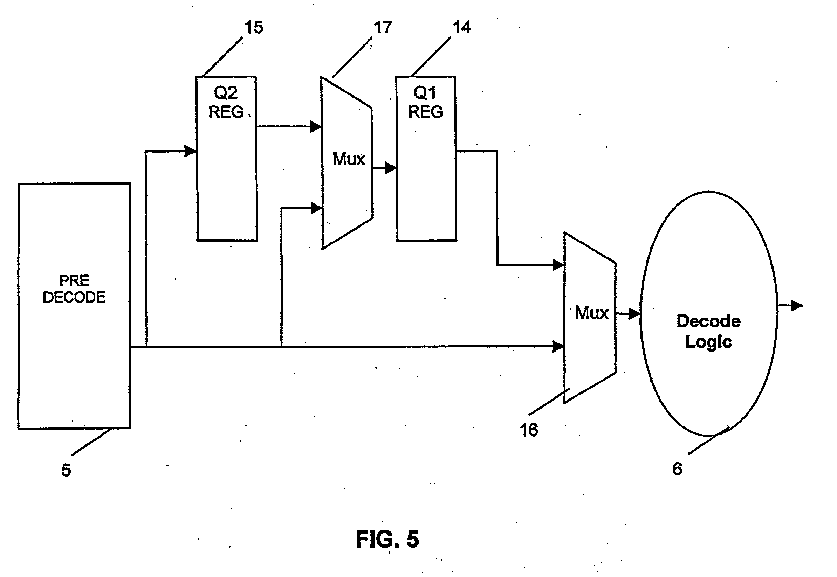

FIG. 5 shows, schematically, a physical implementation of part of the integer pipeline of FIGs. 3 and 4 between two the predecode stage 5 and the decode stage 6. A first multiplexer 16 is provided between the Predecode stage 5 and the Decode stage 6. The first multiplexer 16 has an output coupled to an input of the Decode stage 6 and a pair of inputs, a first of which is coupled directly to an output of the Predecode stage 5, and a second of which is coupled to an output of the first Delay stage 14. A second multiplexer 17 is provided between the first Delay stage 14 and the second Delay stage 15. The second multiplexer 17 has an output coupled to an input of the first Delay stage 14 and a pair of inputs, a first of which is coupled directly to the output of the Predecode stage 5, and a second of which is coupled to an output of the second Delay stage 15.

Thus, if a previous instruction is stalled in the Decode stage 6, an instruction cannot issue directly to the Decode stage 6 from the Predecode stage 5 via multiplexer 16. Instead, the instruction from Predecode stage 5 issues via the second multiplexer 17 to the first Delay (Q1) stage 14, unless there is an instruction in the first Delay stage 14 that cannot issue, in which case the instruction from Predecode stage 5 issues directly to the second (Q2) Delay stage 15, as was described above. The first and second multiplexers 16 and 17 thus provide the "switching" function, allowing the instructions to flow into a stage either from the Predecode stage 5 or from the previous Delay stage. Of course, the second Delay stage 15 does not need a multiplexer between it and the Predecode stage 5 since an instruction flowing into the second Delay stage 15 can only come from the Predecode stage 5.

It will be apparent from the above description, that the embodiment of the invention described above can be considered as a number of static pipelines of differing lengths, the particular pipeline being used depending on previous instructions. Each of the different pipelines has a different effective length so that their effective load-use penalty differs and the most appropriate one can be chosen so as to minimise the actual load-use penalty for a particular instruction, depending on previous instructions being executed.

Whilst only one particular embodiment of the invention has been described above, it will be appreciated that a person skilled in the art can make modifications and improvements without departing from the scope of the present invention. For example, the control mechanism for switching the delay stages into and out of the pipeline can be different from that described above. Furthermore, as mentioned above, the number of delay stages available for switching can be varied according to the length of the pipeline and the required efficiency and predominant types of pipelines in the device. There could be several different types of pipeline, rather than two types as described above, and more than one of them, possibly all of them, could have delay stages available to them to change their effective lengths, if necessary.

## Claims

1. An electronic processing device having at least two pipelines arranged in parallel to receive a series of instructions, each pipeline having a plurality of stages through which the instructions pass, and wherein at least one of the pipelines is provided with at least one delay stage which is switchable into and out of the pipeline to increase or decrease its effective length.

2. An electronic processing device according to claim 1, wherein the delay stage is switched into the pipeline between a predecode stage and a decode stage of the pipeline.

3. An electronic processing device according to either claim 1 or claim 2, further comprising control means for controlling the at least one delay stage to switch it into and out of the pipeline depending on whether a previous instruction in the pipeline is stalled or not.

4. An electronic processing device according to claim 3, wherein the control means controls the at least one delay stage to switch it into the pipeline between a predecode stage and a decode stage, if a previous instruction is stalled in the decode stage, and wherein the control means controls the at least one delay stage to switch it out of the pipeline if the predecode stage has no instruction to pass to any decode stage.

5. An electronic processing device according to either claim 3 or claim 4, comprising a plurality of delay stages switchable into and out of a series of delay stages in the pipeline to increase or decrease its effective length.

6. An electronic processing device according to claim 5, wherein the series of delay stages is switched into the pipeline between a predecode stage and a decode stage of the pipeline.

7. An electronic processing device according to claim 6, wherein the control means controls the plurality of delay stages by switching one delay stage into the series adjacent the predecode stage per clock cycle if a previous instruction is stalled in the next stage subsequent to the predecode stage, and wherein the control means controls the plurality of delay stages to switch one delay stage adjacent the predecode stage out of the pipeline per clock cycle if the predecode stage has no instruction to pass to any decode stage.

8. An electronic processing device according to any one of claims 5 to 7, wherein the maximum number of delay stages available for switching into a series in a pipeline is equal to the load-use penalty for that pipeline.

9. An electronic processing device according to any preceding claim, wherein the pipeline provided with at least one delay stage switchable into and out of the pipeline is an integer pipeline.

10. An electronic processing device according to claim 9, wherein the other pipeline is a load/store pipeline.

11. An electronic processing device according to any preceding claim, further comprising an instruction flow controller for determining which instructions in the pipelines can continue, which instructions must stall and which results can be forwarded to a decode stage if the decode stage requires a result that is not immediately available to it.

12. An electronic processing device according to claim 11, wherein the instruction flow controller determines the stalling of instructions and forwarding of results according to the relative age of the instructions in the pipelines.

13. An electronic processing device according to claim 11 or claim 12, wherein the instruction flow controller determines how many delay stages (Q-value) are switched into the pipeline and utilises that Q-value in determining the stalling of instructions and forwarding of results.

14. An electronic processing device according to claim 13, wherein the instruction flow controller determines the stalling of instructions and forwarding of results according to a set of rules which provide the relative ages of instructions in the pipelines for different Q-values.

15. An electronic processing device according to claim 14, wherein the set of rules include the following rules which provide the age order of instructions in the different stages in the at least two pipelines (A and B):
For Q=0: B-Ex2, A-Ex1, B-EX1, A-D, B-D, PD, F
For Q=1: B-Ex2, A-D, B-Ex1, A-Q1, B-D, PD, F
For Q=2: B-Ex2, A-Q1, B-Ex1, A-Q2, B-D, PD, F,
wherein the pipelines include two execution stages (Ex1 and Ex2), decode stage (D), a predecode stage (PD), a fetch stage (F) and delay stages according to the Q-Value.

16. A method of pipelining in an electronic processing device having at least two pipelines arranged in parallel to receive a series of instructions, each pipeline having a plurality of stages through which the instructions pass, the method comprising the steps of:
at a first clock cycle, providing a first respective instruction to a first stage of each of the respective pipelines; and
at subsequent clock cycles, providing a subsequent respective instruction to the first stage of each respective pipeline, and, unless a previous instruction is stalled in a pipeline, moving each respective instruction to the next stage of the respective pipeline;
wherein, if a previous instruction is stalled in a pipeline, a delay stage is switched into that pipeline to receive the next instruction.

17. A method of pipelining in an electronic processing device according to claim 16, wherein, if a previous instruction is stalled in a pipeline, the instructions in the other pipeline(s) are not stalled or delayed.

18. A method of pipelining in an electronic processing device according to either claim 16 or claim 17, wherein the delay stage is switched into the pipeline between a predecode stage and a decode stage of the pipeline, if a previous instruction is stalled in the decode stage, and wherein the delay stage is switched out of the pipeline if the predecode stage has no instruction available to pass to any decode stage.

19. A method of pipelining in an electronic processing device according to any one of claims 16 to 18, wherein a plurality of delay stages is available for switching into a series in a pipeline to increase or decrease its effective length.

20. A method of pipelining in an electronic processing device according to claim 19, wherein the plurality of delay stages is available for switching into the pipeline between a predecode stage and a decode stage of the pipeline.

21. A method of pipelining in an electronic processing device according to claim 20, wherein one delay stage is switched into the pipeline adjacent the predecode stage per clock cycle if a previous instruction is stalled in the decode stage, and wherein one delay stage adjacent the predecode stage is switched out of the pipeline per clock cycle if the predecode stage has no instruction to pass to any decode stage.

22. A method of pipelining in an electronic processing device according to any one of claims 19 to 21, wherein the maximum number of delay stages available for switching into a pipeline is equal to the load-use penalty for that pipeline.

23. A method of pipelining in an electronic processing device according to any one of claims 16 to 21, wherein the pipeline provided with at least one delay stage switchable into and out of the pipeline is an integer pipeline.

24. A method of pipelining in an electronic processing device according to claim 23, wherein the other pipeline is a load/store pipeline.

25. A method of pipelining in an electronic processing device according to any one of claims 16 to 24, further comprising the step of determining which instructions in the pipelines can continue, which instructions must stall and which results can be forwarded to a decode stage if the decode stage requires a result that is not immediately available to it.

26. A method of pipelining in an electronic processing device according to claim 25, wherein the step of determining the stalling of instructions and forwarding of results utilises the relative age of the instructions in the pipelines.

27. A method of pipelining in an electronic processing device according to claim 25 or claim 26, wherein the step of determining the stalling of instructions and forwarding of results includes the steps of determining how many delay stages (Q-value) are switched into the pipeline and utilising that Q-value in determining the stalling of instructions and forwarding of results.

28. A method of pipelining in an electronic processing device according to claim 27, wherein the step of determining the stalling of instructions and forwarding of results utilises a set of rules which provide the relative ages of instructions in the pipelines for different Q-values.

29. A method of pipelining in an electronic processing device according to claim 28, wherein the set of rules include the following rules which provide the age order of instructions in the different stages in the at least two pipelines (A and B):
For Q=0: B-Ex2, A-Ex1, B-EX1, A-D, B-D, PD, F
For Q=1: B-Ex2, A-D, B-Ex1, A-Q1, B-D, PD, F
For Q=2: B-Ex2, A-Q1, B-Ex1, A-Q2, B-D, PD, F,
wherein the pipelines include two execution stages (Ex1 and Ex2), decode stage (D), a predecode stage (PD), a fetch stage (F) and delay stages according to the Q-Value.

30. An electronic processing device substantially as hereinbefore described with reference to the drawings.

31. A method of pipelining in an electronic processing device substantially as hereinbefore described with reference to the drawings.
